**Europäisches Patentamt**

**European Patent Office**

**Office européen des brevets**

(19)

(11) Veröffentlichungsnummer: **0 293 611 B1**

(12) **EUROPÄISCHE PATENTSCHRIFT**

(45) Veröffentlichungstag der Patentschrift: **16.12.92**

(51) Int. Cl.⁵: **C08F 2/26**

(21) Anmeldenummer: **88106970.2**

(22) Anmeldetag: **30.04.88**

(54) **Verwendung eines fetten Öls ex Helianthus annuus zur Herstellung von Emulgiermitteln für die Emulsionspolymerisation.**

(30) Priorität: **08.05.87 DE 3715421**

(43) Veröffentlichungstag der Anmeldung:
**07.12.88 Patentblatt 88/49**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**FR-A- 1 274 077**
**US-A- 3 269 968**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Höfer, Rainer, Dr.**
**Klever Strasse 31**
**W-4000 Düsseldorf 30(DE)**
Erfinder: **Eierdanz, Horst, Dr.**
**Verbindungsstrasse 5**
**W-4010 Hilden(DE)**

**Beschreibung**

Die Erfindung betrifft die Verwendung eines fetten Öles ex Helianthus annuus mit einem Ölsäuregehalt von 78 bis 92 Gew.-% und einem Linolsäuregehalt von 2 bis 8 Gew.-%, jeweils bezogen auf enthaltende Gesamtfettsäuren, Rest (auf 100 Gew.-%) gegebenenfalls Palmitinsäure und Stearinsäure sowie bis zu 1 Gew.-% Fettsäuren aus der von Myristin-, Palmitolein-, Linolen-, Arachin-, Eikosen- und Erucasäure gebildeten Gruppe unter Ausschluß von Anreicherungsschritten bezüglich des Ölsäuregehaltes zur Herstellung von Alkali-, Ammonium- und/oder Alkanolammoniumsalzen von gegebenenfalls dihydroxy-substituierten Fettsäuren als Emulgiermittel für die Emulsionspolymerisation.

Es ist bekannt, daß Alkalisalze von Fettsäuren sich besonders gut zur Emulsionspolymerisation von Monomeren wie Butadien, Styrol, Chloropren oder Acrylnitril eignen; vgl. R. F. Dunbrook, India Rubber Wld. 117, 203 (1948). Es entstehen dabei stabile Latices, die durch Ansäuern oder mit Hilfe einer gesättigten Natriumchloridlösung leicht koaguliert werden können. Es wurde nachgewiesen, daß die Salze von Fettsäuren mit 16 bis 18 Kohlenstoffatomen als Emulgiermittel bei der Butadiencopolymerisation eingesetzt, im Vergleich zueinander gleiche Polymerisationsgeschwindigkeiten der Monomeren ergeben (H. Bartl, Houben-Weyl, Methoden der organischen Chemie, Band XIV/1, Makromolekulare Stoffe, Teil 1, Seite 193, Georg-Thieme-Verlag, Stuttgart (1961). Ungesättigte Fettsäuren zeichnen sich gegenüber gesättigten Fettsäuren gleicher Kohlenstoffzahl durch ihre flüssige Konsistenz und die bessere Löslichkeit ihrer Alkalisalze aus; damit ist eine bessere Handhabbarkeit in der betrieblichen Praxis verbunden. So hat z.B. Natriumoleat bei der Entwicklung der Emulsionspolymerisation von Synthesekautschuk bereits eine bedeutsame Rolle gespielt. Es ist selbst bei tiefen Temperaturen ein wirksamer Emulgator (M. H. Reich, B. Moss, J. M. Gyenge, Rubber Age (N.Y.) 76, Seite 391 (1954)). Natrium- bzw. Kaliumoleat als Emulgatoren für die Polymerisation werden weiterhin in US-PS 24 69 132, US-PS 25 89 919, US-PS 24 18 782, DE-PS 923 333, GB-PS 744 455 und US-PS 26 23 032 beschrieben.

Obwohl Oleate als Emulgatoren für die Polymerisation also durchaus bekannt sind, hat es sich gezeigt, daß die Polymerisation gestört ist, wenn die Seifen größere Anteile an mehrfach ungesättigten Fettsäuren enthalten. Dies ist bei der Gewinnung der Seifen aus Fetten natürlicher Herkunft normalerweise der Fall, vgl. C. W. Carr, I. M. Kolthoff, E. J. Meehan, R. J. Stenberg, J. Polymer Sci. 5, 191 (1950), und J. W. Wilson, E. S. Pfau, Ind. Eng. Chem. 40, 530 (1948). Eine besonders starke Inhibierung der Polymerisationsreaktion wird dabei von Natriumlinoleat ausgelöst (J. W. Wilson, E. S. Pfau, a.a.O.). Natriumlinoleat wurde daher bereits schon als Regler in der Kautschuksynthese eingesetzt (H. Bartl, a.a.O., Seite 194, sowie DE-PS 706 548 und W. Graulich, W. Becker, Makromol. Chem. 3, 70 (1949)).

Es hat daher nicht an Versuchen gefehlt, für die Polymerisation geeignete linolen- und linolsäurearme Ölsäuren herzustellen. Zwar ist es auf relativ einfache Weise möglich, Talgfettsäure durch eine selektive katalytische Hydrierung in eine für die Synthesekautschuk-Herstellung hervorragend geeignete Fettsäurezusammensetzung zu überführen, jedoch geht bei diesem Härtungsprozeß der Handhabungsvorteil der Ölsäure, die flüssige Konsistenz, verloren.

Die Trennung von flüssigen und festen Fettsäuren kann in der Praxis durch
- hydraulische Pressung,
- Lösemitteltrennung oder
- Umnetzung nach dem Twitchell-Verfahren (vgl. H. Schönfeld, (Hrsg.), Chemie und Technologie der Fette und Fettprodukte, Band 2, Seite 534 ff, Verlag Julius Springer, Wien, 1937)

erfolgen.

Es soll zwar möglich sein, mehrfach ungesättigte Fettsäuren von Ölsäure durch Extraktionsverfahren abzutrennen, jedoch ist das hierzu als Extraktionsmittel vorgeschlagene Schwefeldioxid nur schwer und unter hohen Sicherheitsauflagen handhabbar (vgl. DE-PS 434 794). Moderne Verfahren zur Ölsäuregewinnung beruhen entweder auf der Trennung von festen und flüssigen Fettsäuren durch Umnetzung oder durch Lösemittelextraktion. Lediglich Olivenölfettsäure kann ohne Trennvorgänge direkt aus der Spaltung von Olivenöl gewonnen werden, jedoch ist die Produktzusammensetzung dieser Fettsäure sehr schwankend, und normalerweise enthält die Olivenölfettsäure noch etwa 10 bis 15 % gesättigter Fettsäuren, die sich nachteilig auf die Latex-Teilchengröße auswirkt. Olivenölfettsäure ist daher normalerweise als Emulgator zur Emulsionspolymerisation nicht geeignet. Hoch ölsäurehaltige Fettsäuren sind weiterhin aus den Hufen von Schlachtrindern verfügbar (Klauenöl, 79 % Ölsäure), jedoch wird auch hier normalerweise eine Netzmitteltrennung oder ein Extraktionsprozeß durchgeführt, um die Ölsäure von ca. 20 % gesättigten Fettsäuren zu befreien. Schließlich ist Tallöl als Rohstoff für Emulgatoren für die Emulsionspolymerisation eingesetzt worden. Bei Tallöl macht jedoch der Gehalt an Abietinsäure eine katalytische Härtungsoperation (Disproportionierung) unbedingt erforderlich, vgl. DE-PS 25 10 803.

Die Erfindung beruht auf der überraschenden Erkenntnis, daß sich ein fettes Öl ex Helianthus annuus (Sonnenblume) einer Sorte, wie sie z.B. aus der US-PS 4 627 192 bekannt ist, mit einem Ölsäuregehalt von 78 bis 92 Gew.-%, insbesondere 84 bis 90 Gew.-% und einem Linolsäuregehalt von 2 bis 8 Gew.-%, insbesondere 6 bis 8 Gew.-%, sich trotz des hohen Linolsäuregehaltes ausgezeichnet für die Herstellung von Alkali-, Ammonium- und/oder Alkanolammoniumsalzen von gegebenenfalls dihydroxy-substituierten Fettsäuren als Emulgiermittel für die Emulsionspolymerisation eignet, ohne daß dabei irgendwelche Anreicherungsverfahren wie Preß, Extraktions- oder Netzmitteltrennverfahren erforderlich sind. Die Fettsäuren können direkt durch Spaltung des genannten fetten Öls gewonnen werden, z. B. durch Druckspaltung, wobei eine einfache Destillation ausreicht. Die so erhaltenen Fettsäuren werden dann direkt in die Alkalisalze, insbesondere Natrium- und Kaliumsalze, überführt. Diese Salze sind insbesondere für die Herstellung von Synthesekautschuk und Emulsionspolystyrol geeignet, bewirken ein störungsfreies Polymerisationsverhalten und führen zu farblich besonders hochwertigen Kautschukmaterialien. Es ist auch möglich, diese Ölsäuren durch Epoxidation und Hydrolyse der Epoxidbindung mit Wasser in sogenannte Dihydroxystearinsäuren zu überführen, die ihrerseits hervorragend als Emulgatoren für die Herstellung von Polyvinylchlorid nach Emulsions- und Mikrosuspensions-Polymerisationsverfahren geeignet sind.

Da die als Ausgangsmaterialien verwendeten fetten Öle Naturstoffe sind, sind die Anteile ihrer Hauptkomponenten gewissen Schwankungen unterworfen. Typischerweise weisen die fetten Öle bzw. die daraus erfindungsgemäß erhaltenen Fettsäure-Monoglyceride hinsichtlich der Fettsäuren die folgenden Schwankungsbreiten auf:

| | |
|---|---|
| Ölsäure: | 78 bis 92 Gew.-% |
| Linolsäure: | 2 bis 10 Gew.-% |
| Palmitinsäure: | 2 bis 5 Gew.-% |
| Stearinsäure: | 2 bis 7 Gew.-%. |

Die Erfindung wird im folgenden anhand von Anwendungsbeispielen näher erläutert. Dabei werden die erfindungsgemäß unter Verwendung von Fettsäuren der eingangs genannten Art hergestellten Emulgatoren mit solchen aus einer Talgspaltfettsäure gemäß dem Stand der Technik gewonnenen verglichen.

Beispiel

Die Sonnenblumenölfettsäure, die erfindungsgemäß eingesetzt wurde, hatte die folgende gaschromatografisch ermittelte Zusammensetzung:

| | |
|---|---|
| Myristinsäure | 0,1 Gew.-% |
| Palmitinsäure | 3,1 Gew.-% |
| Stearinsäure | 2,0 Gew.-% |
| Ölsäure | 86,2 Gew.-% |
| Linolsäure | 7,8 Gew.-% |
| Linolensäure | 0,2 Gew.-% |
| Arachinsäure | 0,3 Gew.-% |
| Eikosensäure | 0,2 Gew.-% |
| Erucasäure | 0,2 Gew.-% |

In einem 2 1-Glaspolymerisationsreaktor wurden 69,6 g einer 2 %-igen $K_2S_2O_8$-Lösung in VE-Wasser, 626,0 g VE-Wasser, 6,9 g (AS) Emulgatorseife (Natriumsalz) und 297,5 g Styrol gemeinsam vorgelegt. Der Reaktor wurde mit Stickstoff gespült; das Reaktionsgemisch wurde unter Rühren auf 75°C erhitzt und 7 Stunden polymerisiert. Anschließend wurde auf Raumtemperatur abgekühlt und filtriert. Die Ergebnisse sind in der folgenden Tabelle zusammengefaßt.

3

Tabelle

| Emulgatorseife | Koagulat (%) | Viskosität des Latex (mPa.s) | mittlere Latex-Teilchengröße |
|---|---|---|---|
| I | < 0,1 | 15 | 43 |
| II | 2,0 | 12,5 | n.b. |
| III | 0,4 | 10 | 50 |
| IV | 3,5 | 10 | n.b. |

geprüfte Emulgatorseifen, Na-Salze:

I Sonnenblumenölfettsäure gemäß Erfindung

II 9.10-Dihydroxystearinsäure techn. auf Basis einer Sonnen blumenölfettsäure gemäß Erfindung

Vergleich

III technische Ölsäure (Talgspaltfettsäure)

IV 9.10-Dihydroxystearinsäure techn. auf Basis einer Talgspaltfettsäure

Aus der Tabelle ergibt sich, daß mit den Emulgatorseifen der Erfindung sich günstige Ergebnisse hinsichtlich der Koagulatbildung ergeben, obwohl diese Emulgatoren größenordnungsmäßig einen vergleichbar hohen Linolsäuregehalt wie Emulgatoren aus Talgspaltfettsäure (gemäß Stand der Technik) aufweisen.

**Patentansprüche**

1.  Verwendung eines fetten Öles ex Helianthus annuus mit einem Ölsäuregehalt von 78 bis 92 Gew.-% und einem Linolsäuregehalt von 2 bis 8 Gew.-%, jeweils bezogen auf enthaltende Gesamtfettsäuren, Rest (auf 100 Gew.-%) gegebenenfalls Palmitinsäure und Stearinsäure sowie bis zu 1 Gew.-% Fettsäuren aus der von Myristin-, Palmitolein-, Linolen-, Arachin-, Eikosen- und Erucasäure gebildeten Gruppe unter Ausschluß von Anreicherungsschritten bezüglich des Ölsäuregehaltes zur Herstellung von Alkali-, Ammonium- und/oder Alkanolammoniumsalzen von gegebenenfalls dihydroxy-substituierten Fettsäuren als Emulgiermittel für die Emulsionspolymerisation.

**Claims**

1.  The use of a fatty oil ex Helianthus annuus containing 78 to 92% by weight oleic acid and 2 to 8% by weight linoleic acid, based on total fatty acids present, balance (to 100% by weight) optionally palmitic acid and stearic acid and up to 1% by weight fatty acids from the group comprising myristic, palmitoleic, linolenic , arachic, eicosenoic and erucic acid, with elimination of enrichment steps in respect of the oleic acid content, for the production of alkali, ammonium or alkanolammonium salts of optionally dihydroxy-substituted fatty acids as emulsifiers for emulsion polymerization.

**Revendications**

1.  Mise en oeuvre d'une huile grasse ex Helianthus annuus avec une concentration en acide oléique de 78 à 92 % en poids et une teneur en acide linoléique de 2 à 8 % en poids, dans chaque cas par rapport au total des acides gras contenus, le reste (pour 100 % en poids) étant constitué le cas échéant d'acide palmitique et d'acide stéarique, avec jusqu'à 1 % en poids d'acides gras faisant partie du groupe formé par les acides myristique, palmitoléique, linolénique, arachidique, eïcosénique et érucique, en omettant les étapes d'enrichissement en ce qui concerne la concentration en acide oléique pour la préparation de sels de métaux alcalins, d'ammonium et/ou d'alcanolammonium d'acides gras éventuellement dihydroxy-substitués, comme émulsifiants pour la polymérisation en émulsion.